Europäisches Patentamt

European Patent Office

Office européen des brevets

(11) Publication number: **0 164 956**
**A1**

## (12) EUROPEAN PATENT APPLICATION

(21) Application number: **85303784.4**

(22) Date of filing: **30.05.85**

(51) Int. Cl.⁴: **F 02 M 35/024**
**B 01 D 46/24**

(30) Priority: **01.06.84 GB 8414030**

(43) Date of publication of application:
**18.12.85 Bulletin 85/51**

(84) Designated Contracting States:
**BE DE FR IT NL SE**

(71) Applicant: **Coopers Filters Limited**
**20 St Mary's Parsonage**
**Manchester M3 2NL(GB)**

(72) Inventor: **Gladstone, Robert Steuart**
**123, Croesonen Park**
**Abergavenny Gwent Wales(GB)**

(74) Representative: **Crux, John Anthony et al,**
**P.O. Box 20 Ashburton Road West Trafford Park**
**Manchester M17 1RA(GB)**

(54) Improvements in and relating to air cleaners.

(57) A vertically-disposed air intake duct for an engine incorporates an air cleaner element (10) and is provided with an upwardly-facing recess (19) around the base of the element, to receive dust and/or adventitious liquid, typically water. The recess is preferably provided with a drain orifice (20).

FIG.1

Croydon Printing Company Ltd.

- 1 -

Improvements in and relating to Air Cleaners

This invention relates to air cleaner intake pipes and more particularly to such a pipe when used as a housing for an air cleaner element for an internal combustion engine.

Heavy duty automotive air cleaners for trucks and the like are often provided with an intake duct extending vertically, for example up the back wall of the driver's cab, to a location where the incoming air will be less likely to contain dirt and/or liquid water thrown up from the road by other vehicles. Such intake ducts are known as (and defined herein as) stack pipes and a stackpipe which itself constitutes a housing for a filter element is known as (and defined herein as) a stackpipe cleaner.

Common to both the stackpipe and the stackpipe cleaner is condensation and/or drops of water deposited on the inner surface of the duct. Ordinarily it runs down and accumulates and/or is gradually entrained by the airflow. However, with a conventional stackpipe cleaner there is another problem which arises every time the filter element is due for replacment. That is the very high risk of particulate contaminant dropping off the element into the clean air side of the duct as the element is withdrawn from the stackpipe. The usual procedure is to temporarily disconnect the top part of the duct, unfasten the clamping nut and then to withdraw the dirty element vertically until it is clear of the duct. During this latter operation the seal at the base of the element is inevitably broken, exposing the clean air side of the system to contaminant.

It is an object of this invention to eliminate or at least minimize both problems.

According to the present invention, an air intake for an internal combustion engine comprises a generally vertically-disposed duct with means for supporting a generally vertically-disposed tubular filter element therein said duct is constrained to flow through said element from outside to inside thereof, charactersied in that the means for supporing the element comprises an annular rim against the upper surface of which the base of said element is mounted in sealing relation, together with an imperforate web supporing said annular rim and defining with the inner wall of the duct an upwardly facing recess radially outwardly of said element and below the base thereof.

Preferably, a drain aperture is provided in the wall of the duct to communicate with the lowermost part of the recess. Preferably the base of the recess is in a plane which is not normal to the major axis of the duct, so that it slopes relative to the normal, the aperture then being located at the lowest possible point on the duct.

The space between the web and the inner wall of the stackpipe thus constitutes a trap for loose particulate matter, as well as an adventitious liquid trap when the cleaner is in use. The risk of dirt falling into the clean air side on filter element removal is greatly reduced. Dirt already in the space can be left there until the new element is firmly seated in place against the annular rim. An air line can then be used to blow out the accumulated detritus through the aperture, or it may be sucked out with some suitable appliance.

Particularly preferred filter elements for a stackpipe cleaner are the frustoconical pleated paper elements of GB 1507824 since this configuration is ideally suited to use in relatively narrow casings such as stackpipes.

In order that the invention be better understood a preferred embodiment of it will now be described by way of example with reference to the accompanying drawing; in which:-

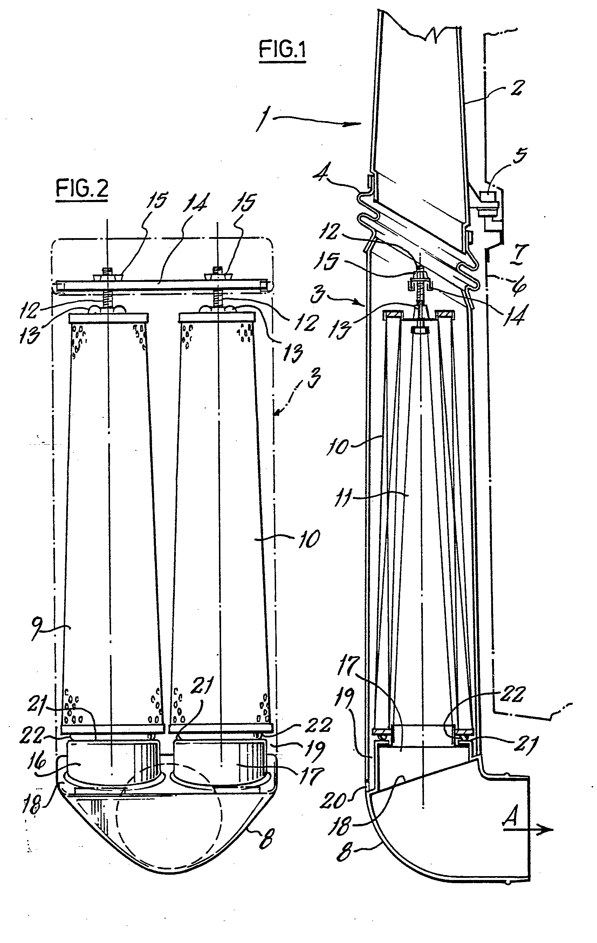

Figure 1 is a diagrammatic cross-sectional side view through a stackpipe cleaner in accordance with the invention, and

Figure 2 is a cross-sectional side view of part of figure 1 taken in direction A.

Referrng to both figures, a stackpipe duct 1 comprises an upper section 2 part only of which is shown) and a lower section 3. The two sections are connected by a flexible bellows joint 4, the upper section 2 being demountable in order to gain access to the inside of the lower section, 3. The stackpipe is attached at 5 to the backwall 6 of the cab 7 of a truck (not shown). At the bottom of the lower section 3 there is an elbow section 8, from which the usual pipework (not shown) leads to the vehicle engine (also not shown).

The lower section 3 contains a pair of frusto-conical pleated paper filter elements 9, 10. The construction of these is preferably as discussed in GB 1507824 and/or GB 1604979 and/or GB 2070969 and need not be further discussed herein. Each element is retained/located by an internal vertically extending metal web 11 terminating at its upper end in a screw-threaded bolt 12, wing nut 13 being used to retain the element in place on the web 11. To locate the otherwise free ends of the webs/elements relative to the upper portion of the lower section 3 a cross bracket 14 is employed, together with individual securing clips 15 for each bolt end where it projects through the bracket 14.

Each web 11 is secured at its lower end across the mouth of a filter element outlet duct 16, 17 respectively, which form parts of the elbow section 8. The elbow section also includes a support for the webs 16, 17. This support is in the form of a plate 18 extending across the elbow section at an acute angle to the normal to the lower section 3. The plate 18, the webs 16, 17 together with the adjacent wall of the lower section 3 together define a recess 19 having a sloping bottom, a drain aperture 20 being provided in the wall of the lower section 3 at the lowermost part of the recess.

The filter element supporting webs 16, 17 also carry annular rims 21 against which the filter element bases are seated, with the usual annular rubber seals 22.

In use, the recess 19 serves as a collecting zone for liquid and/or loose particulate matter, the drain aperture 20 allowing the escape of collected material.

- 5 -

0164956

When it is necessary to service the stackpipe cleaner by changing the filter elements, the upper duct section 2 must be detached at the joint 4. The cross bracket 14 can then be removed together with the wing nuts 13, to free the elements. The latter can then be withdrawn upwardly, one at a time, for replacement. However, because of the presence of the webs 16, 17 and the recess 19, there is little or no chance of loose particulate matter (dirt) dropping off the element outer surface into the clean air side of the stackpipe cleaner, at the bottom of the elbow section 8.

Instead, loose material will fall from the element suface into the recess 19, from which it can be retrieved, for example by applying suction to the drain aperture 20.

Alternatively, the whole of the lower section 3 could be lifted off for a thorough cleaning, once again with little risk of dropping dirt into the elbow section 8. In fact it may be removed without first removing the filter elements, thereby making it possible to remove loose dirt before disturbing the element base seals 22. Thus a major disadvantage of stackpipe cleaners can be effectively overcome by adopting the construction just described. The basic concept is however equally effective in removing adventitious liquid from the inner wall of a stackpipe.

- 6 -

0164956

CLAIMS:-

1. An air intake for an internal combustion engine, said intake comprising a generally vertically- -disposed duct with means for supporting a generally vertically-disposed tubular filter element therein so that air flowing downwardly through said duct is contstrained to flow through said element from outside to inside thereof, characterised in that the means for supporing the element comprised an annular rim against the upper surface on which the base of said element is mounted in sealing relation, together with an imperforate web supporting said annular rim and defining with the inner wall of the duct an upwardly facing recess radially outwardly of said element and below the base thereof.

2. An air intake according to claim 1 characterised in that a drain aperture is provided in the wall of the duct to communicate with the lowermost part of the recess.

3. An air intake according to claim 1 or claim 2 characterised in that the base of the recess is in a plane which is not normal to the major axis of the duct.

4. An air intake according to any preceding claim characterised in that the recess-defining web and associated member are parts of an elbow section at the base of the duct (referring to its attitude in use).

5. A stackpipe cleaner substantially as hereinbefore described and illustrated with reference to the accompanying drawings.

1/1

0164956

FIG.1

FIG.2

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 064 359 (LOCKER AIR MAZE LTD.) <br> * Figure 1; Abstract; Page 1, lines 3-6, 56-62, 80-89, 126-129; page 2, lines 1-7 * | 1,2 | F 02 M 35/024 <br> B 01 D 46/24 |
| Y | US-A-3 061 098 (BELOIT IRON WORKS) <br> * Figure 1; column 2, lines 28-49; column 3, lines 11-17 * | 1,2 | |
| A | FR-A- 591 027 (ZENITH) <br> * Page 1, lines 1-8; page 3, lines 69-94; page 4, lines 25-36; figure 2 * | 1,2 | |
| A | DE-A-1 544 086 (McGRAW-EDISON CY.) <br> * Page 1, paragraphe 1; page 5, paragraphe 2; page 7, last three paragraphs; page 8, paragraphe 1; figure 1 * | 1 | **TECHNICAL FIELDS SEARCHED (Int. Cl.4)** <br><br> F 02 M <br> B 01 D |

The present search report has been drawn up for all claims

| Place of search | Date of completion of the search | Examiner |
|---|---|---|
| THE HAGUE | 29-08-1985 | JORIS J.C. |